# EUROPEAN PATENT APPLICATION

(11) **EP 4 708 885 A1**
(43) Date of publication of application: **11.03.2026**
(21) Application number: 24819476.3
(22) Date of filing: 23.04.2024
(51) Int. Cl.: H04N 21/443, H04N 21/4363, H04N 21/436, H04N 21/422

(54) **ELECTRONIC DEVICE AND OPERATION METHOD OF ELECTRONIC DEVICE**

(30) Priority: 07.06.2023 KR 20230073104
(71) Applicant: Samsung Electronics Co., Ltd., Suwon-si, Gyeonggi-do 16677 (KR)
(72) Inventor: KIM, Pyoungyun, Suwon-si Gyeonggi-do 16677 (KR)
(74) Representative: Walaski, Jan Filip
(86) International application number: PCT/KR2024/005468
(87) International publication number: WO 2024/253324

(57) **Abstract**

An electronic device is disclosed. The electronic device according to an embodiment of the present disclosure comprises: a high-definition multimedia interface (HDMI) connection unit for connecting the electronic device and an external electronic device by wire and including a first pin and a second pin; a memory including a power indicator identified based on an electrical signal received through the first pin and indicating a power state of the external electronic device; and at least one processor connected to the HDMI connection unit and the memory, wherein the at least one processor may identify a first power state of the external electronic device based on a first power indicator identified at which a first time has elapsed after booting of the electronic device, determine whether the external electronic device is a first type device supporting HDMI-CEC (consumer electronics control) communication through the second pin in response to identifying that the first power state is the first state, obtain first power state information from the external electronic device through the second pin in response to determining that the external electronic device is the first type device, and determine a final power state of the external electronic device based on the first power state information.

## Description

### [Technical Field]

Embodiments of the disclosure relate to an electronic device and a method for operating the electronic device.

### [Background Art]

With the development of information and communication technology, display devices (e.g., TVs, monitors, etc.) have become capable of outputting various types of content. For example, in addition to content received through cable, satellite signals, terrestrial signals, etc., TVs may provide content received through internet streaming, Blu-ray and digital versatile disc (DVD), content stored in external media devices (e.g., USB drives, external hard drives, memory cards, etc.), and content input through game consoles, etc. TVs have various input ports such as high-definition multimedia interface (HDMI), video graphic array (VGA), component video, etc. to receive content, and may play content input through the same.

To play content on a TV through an HDMI device (e.g., a set-top box), the HDMI device should not only be connected to the TV but also be powered on. In this regard, the TV may provide a power synchronization function between the HDMI device and the TV and, when using the power synchronization function, the TV and the set-top box may be turned on and off together. When controlling the power of the TV and the HDMI device (e.g., the set-top box) using the power synchronization function, a user may control the power of both devices by performing power control on one device, enabling more convenient device management. Further, by simultaneously controlling the power of the TV and the HDMI device, power consumption required for device control may be decreased (e.g., when turning off the TV, the set-top box also cuts power).

### [Disclosure of Invention]

### [Technical Problem]

Regarding power synchronization between the TV and the HDMI device, in case that the TV and the HDMI device do not accurately identify the power state of the counterpart device in real-time, unnecessary power control may be performed on the other end (e.g., the set-top box) due to power control on one end (e.g., the TV). For example, for a TV and an HDMI device with the power synchronization function set, in case that the HDMI device's power is on and only the TV's power is off, in case that a user turns on the TV power, the HDMI device's power will turn off, so a circumstance may occur where the user should turn on the HDMI device's power again.

Based on the discussion as described above, the disclosure relates to a device and method for performing a power synchronization function between a TV and an HDMI device by accurately identifying the power state of the HDMI device.

### [Technical Solution]

An electronic device according to an embodiment of the disclosure may include a high-definition multimedia interface (HDMI) connector wiredly connecting the electronic device and an external electronic device and including a first pin and a second pin. An electronic device according to an embodiment may include a memory including a power indicator identified based on an electrical signal received through the first pin and indicating a power state of the external electronic device. An electronic device according to an embodiment may include at least one processor connected to the HDMI connector and the memory. At least one processor according to an embodiment may identify a first power state of the external electronic device based on a first power indicator identified after a first time elapses after booting of the electronic device. At least one processor according to an embodiment may determine whether the external electronic device is a first type device supporting HDMI-CEC (consumer electronics control) communication through the second pin, in response to identifying that the first power state is the first state. At least one processor according to an embodiment may obtain first power state information from the external electronic device through the second pin in response to determining that the external electronic device is the first type device. At least one processor according to an embodiment may determine a final power state of the external electronic device based on the first power state information.

In an embodiment, the power indicator may indicate a power state of the external electronic device as either a first state being a turned-off state or a second state being a turned-on state. In an embodiment, the first power state information may include information indicating that the power state of the external electronic device is any one of the first state, the second state, a third state being a state transitioning from the first state to the second state, and a fourth state being a state transitioning from the second state to the first state.

At least one processor according to an embodiment may identify a second power state of the external electronic device based on the first power state information. At least one processor according to an embodiment may determine the second power state as the final power state in response to determining that the second power state is the first state or the second state. At least one processor according to an embodiment may identify second power state information and a second power indicator in response to determining that the second power state is the third state or the fourth state.

At least one processor according to an embodiment may identify the second power state information and the second power indicator after a second time elapses from a time at which the electronic device identified the second power state.

At least one processor according to an embodiment may determine the final power state as the first state in case of determining that the second power state is the third state. At least one processor according to an embodiment may determine a third power state determined based on the second power state information and the second power indicator as the final power state in case of determining that the second power state is the fourth state. In an embodiment, the third power state may be either the first state or the second state.

At least one processor according to an embodiment may determine the final power state of the external electronic device based on a third power indicator identified after a third time elapses from in a time of determining that the external electronic device is not the first type, in response to determining that the external electronic device is not the first type.

An electronic device according to an embodiment may further include an infrared (IR) transmitter. At least one processor according to an embodiment may generate a power key for power control of the external electronic device in response to determining that the final power state of the external electronic device is the first state. At least one processor according to an embodiment may transmit the power key through the IR transmitter.

At least one processor according to an embodiment may display a user interface for controlling power of the external electronic device in case of determining that the final power state of the external electronic device is the first state.

A memory according to an embodiment may include information regarding whether the external electronic device is the first type. At least one processor according to an embodiment may determine whether the external electronic device is the first type based on the information regarding whether the external electronic device is the first type.

At least one processor according to an embodiment may identify a type of boot signal that triggered the booting. At least one processor according to an embodiment may determine whether power control of the external electronic device is necessary based on the type of the boot signal. At least one processor according to an embodiment may identify the first power identifier in case of determining that power control of the external electronic device is necessary. In an embodiment, in case of determining that power control of the external electronic device is not necessary, at least one function corresponding to the boot signal may be performed.

At least one processor according to an embodiment may determine whether to release an AoV mode in response to identifying that the boot signal is a voice signal identified in the AoV mode. At least one processor according to an embodiment may determine that power control of the external electronic device is necessary in case of determining to release the AoV mode. At least one processor according to an embodiment may perform a function corresponding to information regarding a voice command included in the voice signal in case of determining not to release the AoV mode.

A method of operating an electronic device according to an embodiment of the disclosure may include identifying a first power state of the external electronic device based on a first power indicator identified after a first time elapses after booting of the electronic device. A method of operating an electronic device according to an embodiment may include determining whether the external electronic device is a first type device supporting HDMI-CEC (consumer electronics control) communication through a second pin of a high-definition multimedia interface (HDMI) connector, in response to identifying that the first power state is the first state. A method of operating an electronic device according to an embodiment may include obtaining first power state information from the external electronic device through the second pin in response to determining that the external electronic device is the first type device. A method of operating an electronic device according to an embodiment may include determining a final power state of the external electronic device based on the first power state information. In an embodiment, the first power indicator may be identified based on an electrical signal received through a first pin of the HDMI connector.

In an embodiment, the power indicator may indicate a power state of the external electronic device as either a first state being a turned-off state or a second state being a turned-on state. In an embodiment, the first power state information may include information indicating that the power state of the external electronic device is any one of the first state, the second state, a third state being a state transitioning from the first state to the second state, and a fourth state being a state transitioning from the second state to the first state.

A method of operating an electronic device according to an embodiment may include identifying a second power state of the external electronic device based on the first power state information. A method of operating an electronic device according to an embodiment may include determining the second power state as the final power state in response to determining that the second power state is the first state or the second state. A method of operating an electronic device according to an embodiment may include identifying second power state information and a second power indicator in response to determining that the second power state is the third state or the fourth state.

A method of operating an electronic device according to an embodiment may include identifying the second power state information and the second power indicator after a second time elapses from a time at which the electronic device identified the second power state.

A method of operating an electronic device according to an embodiment may include determining the final power state as the first state in case of determining that the second power state is the third state. A method of operating an electronic device according to an embodiment may include determining a third power state determined based on the second power state information and the second power indicator as the final power state in case of determining that the second power state is the fourth state. In an embodiment, the third power state may be either the first state or the second state.

A method of operating an electronic device according to an embodiment may include determining the final power state of the external electronic device based on a third power indicator identified after a third time elapses from in a time of determining that the external electronic device is not the first type, in response to determining that the external electronic device is not the first type.

A method of operating an electronic device according to an embodiment may include generating a power key for power control of the external electronic device in response to determining that the final power state of the external electronic device is the first state. A method of operating an electronic device according to an embodiment may include transmitting the power key through the IR transmitter.

A method of operating an electronic device according to an embodiment may include displaying a user interface for controlling power of the external electronic device in case of determining that the final power state of the external electronic device is the first state.

A method of operating an electronic device according to an embodiment may include determining whether the external electronic device is the first type based on information regarding whether the external electronic device is the first type.

### [Advantageous Effects]

Embodiments of the disclosure provide an effect of performing a more accurate power synchronization function using multiple sources to identify the power of an HDMI device through multiple signals.

Further, embodiments of the disclosure provide an effect of enabling faster reception of data from an HDMI device after booting of the TV.

Further, it provides an effect of enabling control of the power of the HDMI device according to the reason for the TV's booting.

Effects of the disclosure are not limited to the foregoing, and other unmentioned effects would be apparent to one of ordinary skill in the art from the following description.

### [Brief Description of Drawings]

FIG. 1 illustrates an example of an electronic device and an external electronic device according to an embodiment of the disclosure.
FIG. 2 illustrates a block configuration of an electronic device according to an embodiment of the disclosure.
FIG. 3 illustrates a block configuration of an electronic device and an external electronic device according to an embodiment.
FIG. 4 illustrates an operation flow of an electronic device according to an embodiment.
FIG. 5 illustrates an operation flow of an electronic device according to an embodiment.
FIG. 6 illustrates an operation flow of an electronic device according to an embodiment.
FIG. 7 illustrates a signaling flow between an electronic device and an external electronic device according to an embodiment of the disclosure.
FIG. 8 illustrates a signaling flow between an electronic device and an external electronic device according to an embodiment of the disclosure.
FIG. 9 illustrates an operation flow of an electronic device 110 according to an embodiment.
FIG. 10 illustrates an operation flow of an electronic device according to an embodiment of the disclosure.

In relation to the description of the drawings, identical or similar reference numerals may be used for identical or similar components.

### [Mode for the Invention]

Hereinafter, embodiments of the present disclosure are described with reference to the accompanying drawings. However, it should be appreciated that the present disclosure is not limited to the embodiments, and all changes and/or equivalents or replacements thereto also belong to the scope of the present disclosure. In the following description, the same/similar reference numerals are used to denote substantially the same components, and no duplicate description is given.

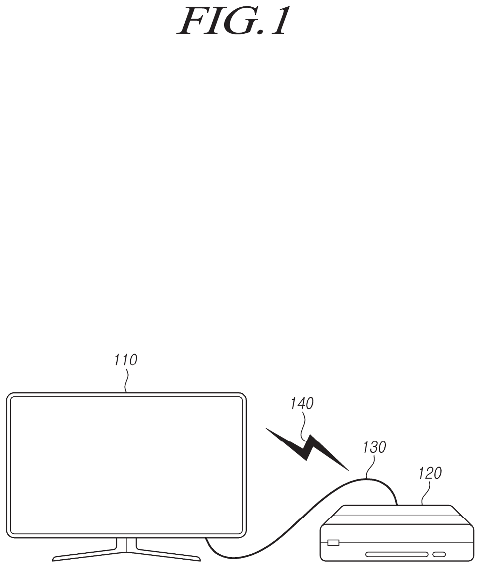

FIG. 1 illustrates an example of an electronic device and an external electronic device according to an embodiment.

Referring to FIG. 1, an electronic device 110 may be a display device for displaying an image or video. An external electronic device 120 may be a device (e.g., a set-top box) for providing content to the electronic device 110. For example, the electronic device 110 may be a display device such as a TV, a monitor, etc., and the external electronic device 120 may be a set-top box, a Blu-ray, a DVD device, a game console device, a home theater device, or an over the top (OTT) device.

In an embodiment, the electronic device 110 may display content data received from the external electronic device 120. The content data received from the external electronic device 120 may mean data regarding content transmitted or sent by a broadcaster, a server, etc.

In an embodiment, the electronic device 110 may be wiredly connected to the external electronic device 120 to form a first link 130. For example, the electronic device 110 and the external electronic device 120 may form the first link 130 through a high-definition multimedia interface (HDMI) connection. The following description takes as an example that the electronic device 110 and the external electronic device 120 are connected through HDMI, but this is an example and may be similarly applied in case of using other types of wired connection methods (USB, VGA, etc.).

In an embodiment, the electronic device may identify a power state of the external electronic device 120 through the first link 130. For example, in case that the power of the external electronic device 120 is turned off or on, the electronic device 110 may identify the power state of the external electronic device 120 through an electrical signal transmitted through the first link 130.

In an embodiment, the electronic device 110 may form a second link 140 for wirelessly transmitting data with the external electronic device 120. For example, the electronic device 110 may transmit an infrared (IR) signal through the second link 140. The IR signal may include information regarding a power key for controlling the power of the external electronic device 120. For example, the electronic device 110 may transmit a short-range wireless communication signal to the external electronic device 120 through the second link 140.

In an embodiment, the electronic device 110 may identify the power state of the external electronic device 120 through an external server (not illustrated). The electronic device 110 may identify the power state of the external electronic device 120 through communication with an external server (not illustrated) connected to the external electronic device 120. In this case, to control the identified power state of the external electronic device 120, the electronic device 110 may use the first link 130 or transmit a signal for power control of the external electronic device 120 to the external server (not illustrated).

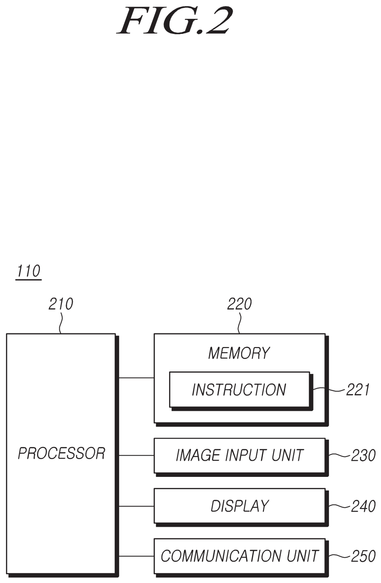

FIG. 2 is a block diagram illustrating a configuration of an electronic device according to an embodiment;

The electronic device of FIG. 2 may be, but is not limited to, a smartphone, a tablet PC, a PC, a smart TV, a mobile phone, a personal digital assistant (PDA), a laptop computer, a media player, a micro server, a digital broadcast terminal, a navigation, a kiosk, a home appliance, or other mobile or non-mobile computing devices. Further, the electronic device 110 may perform various computing functions, such as real-time video viewing and communication. In the following description, it is assumed that the electronic device 110 is a TV or a monitor, but this is merely an example and embodiments of the disclosure may be equally applied to electronic devices having a display function.

According to an embodiment, the electronic device 110 may include a processor 210, a memory 220, an image input unit 230, a display 240, and a communication unit 250.

According to an embodiment, the memory 220 is a storage medium used by the electronic device 110, and may store data such as at least one instruction 221 or setting information corresponding to at least one program. The program may include an operating system (OS) program and various application programs.

The memory 220 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 230 may receive image data through a tuner (not shown), an input/output unit (not shown), or the communication unit 250. The image input unit 230 may include at least one of the tuner and the input/output unit. The tuner may tune and select only the frequency of the broadcast channel to be received by the electronic device 110 from among many radio wave components through amplification, mixing, resonance, or the like for the broadcast signal wiredly/wirelessly received. The broadcast signal may include video, audio, and additional data (e.g., electronic program guide (EPG)). The tuner may receive broadcast channels (or viewing images) from various broadcast sources, such as terrestrial broadcasts, cable broadcasts, satellite broadcasts, Internet broadcasts, and the like. The tuner may be implemented integrally with the electronic device 110 or may be implemented as a separate tuner electrically connected to the electronic device 110. The input/output unit may include at least one of a high definition multimedia interface (HDMI) input port, a component input jack, a PC input port, and a USB input jack capable of receiving video data from an external device of the electronic device 110 under the control of the processor 210. It is obvious to one of ordinary skill in the art that the input/output unit may be added, deleted, and/or changed according to the performance and structure of the electronic device 110.

According to an embodiment, the display 240 may perform functions for outputting information in the form of numbers, characters, images, and/or graphics. The display 240 may include at least one hardware module for outputting. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 240 may display a screen corresponding to data received from the processor 210. The display 240 may be referred to as an 'output unit', a 'display unit', or by other terms having an equivalent technical meaning.

According to an embodiment, the communication unit 250 may provide a wired/wireless communication interface enabling communication with an external device. The communication unit 250 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 210. The short-range communication unit may perform short-range communication wirelessly with an external device under the control of the processor 210. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 210 may control at least one other component of the electronic device 110 and/or execute computation or data processing regarding communication by executing at least one command 221 stored in the memory 220. The processor 210 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

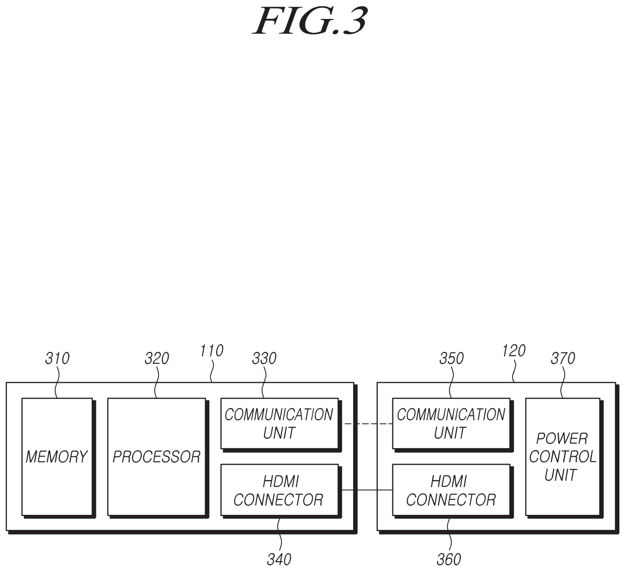

FIG. 3 illustrates a block configuration of an electronic device and an external electronic device according to an embodiment.

In an embodiment, a memory 310 may correspond to the memory 220 of FIG. 2. In an embodiment, a processor 320 may correspond to the processor 210 of FIG. 2. In an embodiment, a communication unit 330 may correspond to the communication unit 250.

In an embodiment, a wireless communication link between the communication unit 330 of the electronic device 110 and the communication unit 350 of the external electronic device 120 may correspond to the second link 140 of FIG. 1. In an embodiment, a link between the HDMI connector 340 of the electronic device 110 and the HDMI connector 360 of the external electronic device 120 may correspond to the first link 130 of FIG. 1.

In an embodiment, the HDMI connector 340 may include a plurality of pins. Different types of signals may be transmitted and received through the plurality of pins. The plurality of pins may include a first pin and a second pin.

In an embodiment, the electronic device 110 may determine a power indicator indicating the power state of the external electronic device 120 through the first pin. The power indicator may be a value indicating the power state of the external electronic device 120. The power indicator may also be referred to as an "HDMI hot plug" value.

In an embodiment, the electronic device 110 may receive an electrical signal generated according to a change in the power state of the external electronic device 120 through the first pin. For example, in case that the power of the external electronic device 120 changes from a turned-off state (hereinafter, "first state") to a turned-on state (hereinafter, "second state"), the external electronic device 120 may transmit a signal indicating that the power has been turned on through the first pin of the HDMI connector 340. The electronic device 110 may store the power indicator of the external electronic device 120 in the memory 310 in response to receiving an electrical signal from the first pin. Further, e.g., in case that the power of the external electronic device 120 changes from the second state to the first state, the external electronic device 120 may transmit a signal indicating that the power has been turned off through the first pin of the HDMI connector 340. The electronic device 110 may store the power indicator of the external electronic device 120 in the memory 310 in response to receiving an electrical signal through the first pin.

In an embodiment, the electronic device 110 may receive information regarding the power state of the external electronic device 120 from the external electronic device 120 through the second pin of the HDMI connector 340. The electronic device 110 may identify the power state of the external electronic device 120 as any one of the first state, the second state, a third state being a state transitioning from the first state to the second state, and a fourth state being a state transitioning from the second state to the first state, based on the information regarding the power state of the external electronic device 120.

In an embodiment, the electronic device 110 may obtain power state information of the external electronic device 120 based on an electrical signal received through the second pin of the HDMI connector 340.

In an embodiment, the second pin of the HDMI connector 340 may be a terminal for performing HDMI-CEC (consumer electronics control) communication between the electronic device 110 and the external electronic device 120. Communication through the second pin between the electronic device 110 and the external electronic device 120 may be performed only in case that both the electronic device 110 and the external electronic device 120 support CEC communication through the second pin. To determine whether the external electronic device 120 supports communication through the second pin, the electronic device 110 may store information regarding whether the external electronic device 120 supports CEC communication in the memory 310.

In an embodiment, the electronic device 110 may transmit a wireless communication signal to the communication unit 350 of the external electronic device 120 through the communication unit 330.

In an embodiment, the electronic device 110 may transmit an infrared (IR) signal including a power key for controlling the power of the external electronic device 120 to the external electronic device 120. For example, in case that the electronic device 110 includes an IR blaster, it may emit an IR signal through the IR blaster. For example, the electronic device 110 may emit IR to a remote control to perform MBR for the external electronic device 120.

In an embodiment, the electronic device 110 may transmit a code set corresponding to a power key for controlling the power of the external electronic device 120 to a remote control device (not illustrated) (e.g., a remote controller) wirelessly connected to the electronic device 110, and the remote control device may control the power of the external electronic device 120 by emitting an infrared (IR) signal corresponding to the code set.

In an embodiment, the electronic device 110 may transmit a signal for changing the power state of the external electronic device 120 to the external electronic device 120 using a consumer electronics control (CEC) communication method.

In an embodiment, in case that the electronic device 110 includes an IR blaster, the electronic device 110 may transmit an IR signal to the external electronic device 120 through the IR blaster. In case that the electronic device 110 does not include an IR blaster, the electronic device 110 may emit an IR signal to a remote control in case that it may perform MBR for the external electronic device 120. In case that the external electronic device 120 supports CEC, the electronic device 110 may control the power state of the external electronic device 120 using the CEC communication method.

In an embodiment, the electronic device 110 may transmit various types of signals to the external electronic device 120 based on short-range wireless communication technology (e.g., Bluetooth, Wi-Fi, etc.).

In an embodiment, the memory 310 may store CEC device information. The CEC device information may mean information regarding a device that may perform CEC communication with the electronic device 110. The information regarding a device that may perform CEC communication with the electronic device 110 may include information regarding a device name, a device manufacturer, a power state, and a physical address of a device that may perform CEC communication.

In an embodiment, the memory 310 may store device recognition information. The device recognition information may include information regarding a manufacturer and information regarding a model name of an HDMI device connected to the electronic device 110. The processor 320 may recognize an HDMI device and manage information regarding the recognized HDMI device based on what is stored in the memory 310.

In an embodiment, the memory 310 may store master boot record (MBR) information of the electronic device 110. The MBR information may index device recognition information and include information such as device type, brand name, codeset name, HDMI port information, and supported key map.

In an embodiment, the processor 320 may map a key code corresponding to the external electronic device 120 connected to the electronic device 110 based on the MBR information of the memory 310 and transmit it to the communication unit 350 of the external electronic device 120 through an IR signal.

In an embodiment, the communication unit 350 may include an IR receiver (not illustrated) for receiving an IR signal.

In an embodiment, the processor 320 may determine whether to transmit the key to the external electronic device 120 based on a power indicator identified through the HDMI connector 340 at the boot time of the electronic device 110. The HDMI connector 340 of the electronic device 110 may obtain a power indicator or power state information based on an electrical signal identified from the HDMI connector 360 of the external electronic device 120.

In an embodiment, the processor 320 may include an AoV state management unit (not illustrated). The AoV state management unit may store an AoV mode state in response to identifying that the power state of the electronic device 110 has changed. The AoV mode state may be stored in the memory 310.

According to an embodiment, the external electronic device 120 may include a communication unit 350, an HDMI connector 360, and a power controller 370. Referring to FIG. 3, the block configuration of the external electronic device 120 illustrates only the configuration for describing the disclosure, but may include other configurations for performing the main function of the external electronic device 120.

In an embodiment, the communication unit 350 may receive a wireless communication signal (e.g., a Bluetooth signal, an IR signal, etc.) transmitted from the communication unit 330. For example, the external electronic device 120 may receive an IR signal including a key for power control of the external electronic device 120 through the communication unit 350.

In an embodiment, the external electronic device 120 may transmit information regarding the power state of the external electronic device 120 and information for indicating the power state to the electronic device 110 through the HDMI connector 360. For example, the external electronic device 120 may transmit information indicating the power state of the external electronic device 120 to the electronic device 110 through the first pin of the HDMI connector 360. For example, the external electronic device 120 may transmit information regarding the power state of the external electronic device 120 through the second pin of the HDMI connector 360.

Although not illustrated in the drawings, in case that the HDMI connector 360 of the external electronic device 120 does not support CEC communication, the external electronic device 120 may not transmit information regarding the power state of the external electronic device 120 to the electronic device 110 through the second pin.

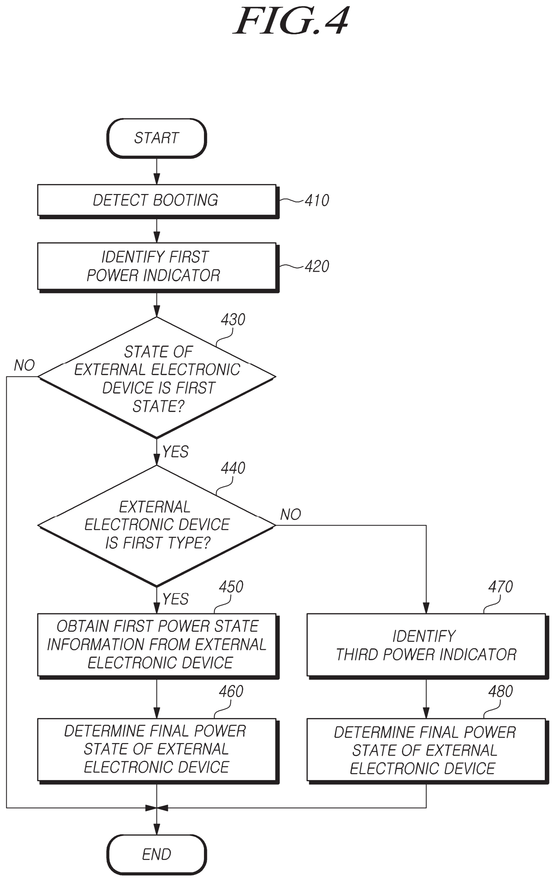

FIG. 4 illustrates an operation flow of an electronic device according to an embodiment. The electronic device of FIG. 4 may be a device corresponding to the electronic device 110 of FIGS. 1 to 3, and the external electronic device of FIG. 4 may be a device corresponding to the external electronic device 120 of FIGS. 1 to 3.

According to an embodiment, in operation 410, the electronic device may detect booting of the electronic device. According to an embodiment, in operation 420, the electronic device may identify a first power indicator. The power indicator may be an indicator corresponding to the power indicator of FIG. 3, and may mean a value identified through the HDMI hot plug function.

In an embodiment, the electronic device may identify the first power indicator in response to detecting the booting of the electronic device. The first power indicator may mean a power indicator of the electronic device identified after a first time elapses after booting. In other words, the electronic device may identify the power indicator stored in the memory in response to identifying that the first time elapses after booting. The electronic device may identify the power indicator identified in this case (the time in case that the first time elapses after booting) as the first power indicator.

In an embodiment, the power indicator may be a value determined based on an electrical signal received through the first pin of the HDMI connector of the electronic device. The HDMI connector may include a plurality of pins (or ports), and the power indicator may be identified based on an electrical signal received through the first pin among these.

In an embodiment, in case that there is a change in the power state of the external electronic device or in case that the electronic device requests a power indicator from the external electronic device, the external electronic device may transmit information indicating the power state of the external electronic device to the electronic device through the first pin.

In an embodiment, the electronic device may store a power indicator value indicating the power state of the external electronic device in the memory and, in case that there is a change in the power state of the external electronic device, may update or store the power indicator stored in the memory based on an electrical signal received from the external electronic device. In an embodiment, the electronic device may identify the power indicator by identifying the value of the power indicator stored in the memory.

In an embodiment, the power indicator may be a value indicating the power state of the external electronic device as either a first state being a turned-off state or a second state being a turned-on state.

In an embodiment, the electronic device may detect the booting of the electronic device and identify the first power indicator after the first time elapses. For example, the electronic device may identify the first power indicator 3 seconds after booting.

According to an embodiment, the first time may be a value set by a user. For example, the first time may be determined based on a user input entered through a user interface for power synchronization settings of the electronic device.

According to an embodiment, in operation 430, the electronic device may identify a first power state of the external electronic device.

In an embodiment, the electronic device may identify the first power state of the external electronic device based on the first power indicator. The first power state may be a power state of the external electronic device identified at a time when the first time elapses after booting. For example, in case that the first power indicator has a value of 0, the electronic device may determine that the first power state of the external electronic device is the first state and, in case that the first power indicator has a value of 1, the electronic device may determine that the first power state of the external electronic device is the second state. The state indicated by the power indicator may be either the first state or the second state.

In an embodiment, in case that the electronic device determines that the first power state of the external electronic device is not the first state, it may determine the final power state of the external electronic device as the second state.

In an embodiment, in case that the electronic device determines that the first power state of the external electronic device is the first state, it may perform operation 440.

According to an embodiment, in operation 440, the electronic device may determine whether the external electronic device is a first type. The first type device may mean a device that may perform HDMI-CEC (consumer electronics control) communication with the electronic device. The electronic device may determine whether the external electronic device is the first type in response to determining that the first power state of the external electronic device is the first state.

In an embodiment, the first type device may include a device that may perform HDMI-CEC communication through the second pin of the HDMI connector. The second pin may mean any one pin among a plurality of pins (or ports) included in HDMI, and may be a different pin from the first pin for receiving an electrical signal for identifying the power indicator.

In an embodiment, the electronic device may determine whether the external electronic device is the first type based on device information of the external electronic device stored in the memory of the electronic device. As described above in the description of FIG. 3, the memory (e.g., the memory 310) of the electronic device may store information regarding HDMI devices connected to the electronic device (e.g., device name, device type, physical address, information regarding whether CEC communication is supported). The electronic device may determine whether the external electronic device is a device supporting CEC communication based on the information stored in the memory.

In an embodiment, in case that the electronic device determines that the external electronic device is the first type, it may perform operation 450.

In an embodiment, in case that the electronic device determines that the external electronic device is not the first type, it may perform operation 480.

According to an embodiment, in operation 450, the electronic device may obtain power state information from the external electronic device. The electronic device may obtain power state information from the external electronic device in response to determining that the external electronic device is the first type device. The power state information may be information corresponding to the power state information described with reference to FIG. 3. The power state information may be referred to as CEC power status information.

In an embodiment, the power state information may include information indicating that the power state of the external electronic device is any one of the first state, the second state, a third state being a state transitioning from the first state to the second state, and a fourth state being a state transitioning from the second state to the first state. In other words, the power state information obtained through the second pin, unlike the power indicator identified through the first pin, may indicate not only the first state and the second state but also the third state and the fourth state, allowing more accurate identification of the power state than the case of identifying the power state of the external electronic device only through the power indicator.

In an embodiment, the electronic device may obtain power state information from the external electronic device through CEC communication performed using the second pin. Although not illustrated in the drawings, the electronic device may transmit a signal requesting power state information of the external electronic device to the external electronic device using the CEC communication method. The external electronic device may transmit power state information of the external electronic device to the electronic device using the CEC communication method in response to receiving the power state request of the external electronic device received from the electronic device. Accordingly, the electronic device may obtain power state information of the external electronic device from the external electronic device.

In an embodiment, although not illustrated in the drawings, before or after operation 440 is performed, the electronic device may determine whether the external electronic device is a second type. The operation of the electronic device determining whether the external electronic device is the second type may include an operation of determining whether the electronic device may identify the power state of the external electronic device through a server. In other words, an external electronic device whose power state the electronic device may identify through a server may be referred to as a second type device. The electronic device may determine whether the external electronic device is the second type and, in case of determining that the external electronic device is the second type, may obtain power state information through a server (not illustrated).

In an embodiment, in case that the electronic device determines that the external electronic device is the second type after performing operation 430 and before performing operation 440, the electronic device may obtain power state information of the external electronic device from the server without performing operation 440.

In an embodiment, in case that the electronic device determines that the external electronic device is not the second type after performing operation 430 and before performing operation 440, the electronic device may perform operation 440.

In an embodiment, even in case that the electronic device determines that the external electronic device is the second type after performing operation 430 and before performing operation 440, the electronic device may additionally perform operation 440.

In an embodiment, in case that the electronic device determines according to operation 440 that the external electronic device is not the first type, the electronic device may determine whether the external electronic device is the second type before performing operation 470. In case that the electronic device determines that the external electronic device is the second type device, it may obtain first power state information of the external electronic device from the server and may not perform operation 470. In case that the electronic device determines that the external electronic device is not the second type device, the electronic device may perform operation 470 as is.

In an embodiment, the electronic device may identify a power state (hereinafter, "second power state") of the external electronic device based on the first power state information of the external electronic device obtained according to operation 450. For example, the electronic device may determine the second power state of the external electronic device as any one of the first state, the second state, the third state, or the fourth state.

According to an embodiment, in operation 460, the electronic device may determine a final power state of the external electronic device.

In an embodiment, in case of identifying the second power state as the first state or the second state based on the first power state information, the final power state may be determined as the same state as the second power state (i.e., the first state or the second state). For example, in case that the second power state is the first state, the final power state of the external electronic device may be determined as the first state and, in case that the second power state is the second state, the final power state of the external electronic device may be determined as the second state.

In an embodiment, in case that the second power state is identified as the third state or the fourth state, the electronic device may obtain second power state information and a second power indicator. The second power state information may be power state information obtained from the external electronic device through CEC communication at a time when a second time elapses from the time of obtaining the first power state information. The second power indicator may mean a power indicator identified in the memory of the electronic device at a time when the second time elapses from the time of obtaining the first power state information. In other words, in case that the second power state of the external electronic device identified from the first power state information indicates that the external electronic device is currently turning on or turning off, it is necessary to identify whether the external electronic device has actually turned on or off after a predetermined time elapses, so it identifies again whether it has turned on or off through CEC communication and the HDMI hot plug value, and determines the final power state based on this result.

In an embodiment, the electronic device may request CEC power status information (power state information) from the external electronic device after the second time elapses from the time of obtaining the first power state information, and accordingly may receive the second power state information from the external electronic device.

In an embodiment, the electronic device may identify whether the HDMI hot plug value (power indicator) stored in the memory has changed after the second time elapses from the time of obtaining the first power state information.

In an embodiment, the length of the second time may be the same as or different from the length of the first time. The second time may be determined based on a user input for setting the second time.

Examples of the electronic device determining the final power state of the external electronic device according to operations 450 and 460 are described in detail in the drawings described below.

According to an embodiment, in operation 470, the electronic device may identify a third power indicator. The third power indicator may mean a power indicator identified after a third time elapses from the time of determining that the external electronic device is not the first type. Even in case that the electronic device determined in operation 430 that the power state of the external electronic device is the first state, which is a turned-off state, through the first power indicator, considering that the first power indicator identified in operation 420 may be incorrectly stored, the HDMI hot plug value is checked once again after a predetermined time elapses to identify the power state of the external electronic device.

According to an embodiment, in operation 480, the electronic device may determine the final power state of the external electronic device based on the identified third power indicator.

In an embodiment, in case that the third power indicator indicates that the external electronic device is in the first state, the electronic device may determine the final power state of the external electronic device as the first state. In case that the third power indicator indicates that the external electronic device is in the second state, the electronic device may determine the final power state of the external electronic device as the second state.

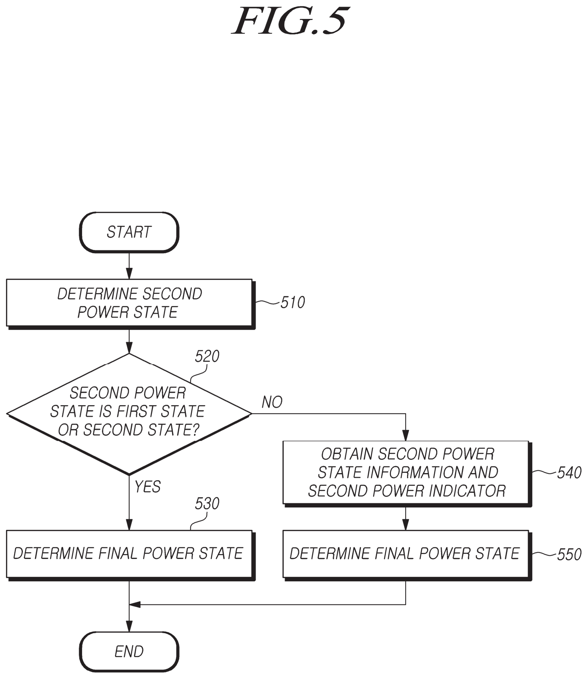

FIG. 5 illustrates an operation flow of an electronic device according to an embodiment. The operation flow of the electronic device illustrated in FIG. 5 relates to an operation for the electronic device to determine the final power state of the external electronic device in case that the first power state of the external electronic device is the first state and the external electronic device is the first type device, and may include all operation contents according to operations 450 and 460 of FIG. 4. In the description of FIG. 5, descriptions of content overlapping those described with reference to FIGS. 1 to 4 may be omitted. Operation 510 of FIG. 5 may be an operation performed in case that the electronic device determines that the external electronic device is the first type according to operation 440 of FIG. 4.

According to an embodiment, in operation 510, the electronic device may determine a second power state.

In an embodiment, the electronic device may determine the second power state of the external electronic device based on the first power state information. The first power state information may include information indicating that the power state of the external electronic device is any one of the first state (off state), the second state (on state), the third state (turning-on state), and the fourth state (turning-off state).

According to an embodiment, in operation 520, the electronic device may determine whether the second power state identified in operation 510 is the first state or the second state. In other words, the electronic device may determine whether the second power state is a fixed state rather than a transition state (the third state and the fourth state).

In an embodiment, in case that the electronic device determines that the second power state of the external electronic device is the first state or the second state, the electronic device may perform operation 530. In an embodiment, in case that the electronic device determines that the second power state of the external electronic device is not the first state or the second state, the electronic device may perform operation 540.

According to an embodiment, in operation 530, the electronic device may determine a final power state of the external electronic device.

In an embodiment, the electronic device may determine the final power state of the external electronic device as the same state as the second power state. For example, in case that the electronic device determines that the second power state of the external electronic device is the first state, the electronic device may determine the final power state of the external electronic device as the first state. For example, in case that the electronic device determines that the second power state of the external electronic device is the second state, the electronic device may determine the final power state of the external electronic device as the second state. In case that the second power state is not a transition state like the third state and the fourth state, there is no possibility of state change, so the second power state may be determined as the final power state of the external electronic device without needing to identify the power state of the external electronic device once again.

According to an embodiment, in operation 540, the electronic device may obtain second power state information and a second power indicator. The electronic device may obtain the second power state information and the second power indicator in response to determining that the second power state is not the first state or the second state, i.e., in case of determining that the second power state is the third state or the fourth state.

In an embodiment, the second power state information may be obtained after the second time elapses from the time in case that the electronic device determines that the second power state of the external electronic device is not the first state or the second state, i.e., from the time of determining that the second power state is the third state or the fourth state.

In an embodiment, the electronic device may obtain the second power state information using the CEC communication method through the second pin of the HDMI connector. In an embodiment, the electronic device may determine the power indicator stored in the memory as the second power indicator at a time when the second time elapses from the time of determining that the second power state is the third state or the fourth state. In case that the second power state is the third state or the fourth state, i.e., a state of turning on or turning off, it is necessary to identify whether the external electronic device has actually turned on or off after a predetermined time elapses, so after a predetermined time (i.e., the second time) elapses, it requests and receives CEC power status information from the external electronic device through CEC communication, and also determines whether the HDMI hot plug value stored in the memory has changed.

According to an embodiment, in operation 550, the electronic device may determine the final power state. The electronic device may determine the final power state based on the second power state information and the second power indicator.

In an embodiment, after the electronic device determines that the external electronic device is in a turning-on state (the third state), in case that both the second power state information and the second power indicator identified after the second time indicate that the external electronic device is in a turned-on state, the final power state of the external electronic device may be determined as the second state.

In an embodiment, after the electronic device determines that the external electronic device is in a turning-off state (the fourth state), in case that both the second power state information and the second power indicator identified after the second time indicate that the external electronic device is in a turned-off state, the final power state of the external electronic device may be determined as the first state.

In an embodiment, after the electronic device determines that the external electronic device is in a turning-on state (the third state), in case that both the second power state information and the second power indicator identified after the second time indicate that the external electronic device is in a turned-off state, the final power state of the external electronic device may be determined as the second state. In the case of a turning-on state, regardless of the power state identified again later, it may be considered that the power state of the external electronic device has not yet been updated, and the final power state may be determined as the second state, which is a turned-on state.

In an embodiment, after the electronic device determines that the external electronic device is in a turning-off state, in case that both the second power state information and the second power indicator identified after the second time indicate that the external electronic device is in a turned-on state, the final power state of the external electronic device may be determined as the second state.

The operation content according to FIG. 5 may be illustrated as an example in Table 1 below.

**[Table 1]**

| 3-second HDMI power check | after adding 3 seconds, CEC power check | HDMI power re-check | final power determination (time of 6 seconds) | power key |
|---|---|---|---|---|
| OFF | OFF | OFF | OFF | transmitted |
| | transition to ON | ON | ON | not transmitted |
| | | OFF | ON | not transmitted |
| | transition to OFF | ON | ON | not transmitted |
| | | OFF | OFF | transmitted |
| | ON | ON | ON | not transmitted |

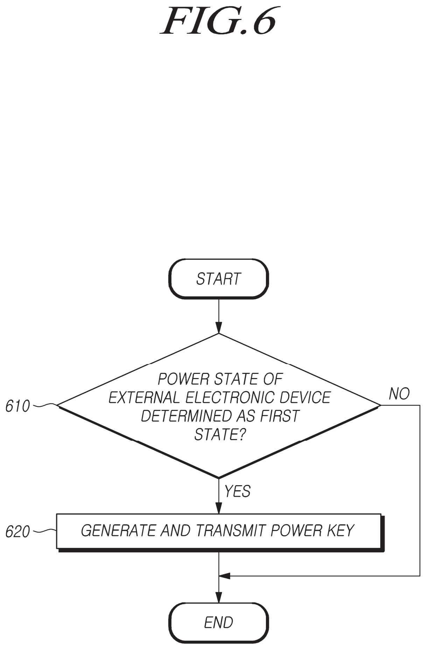

The times such as 3 seconds and 6 seconds exemplified in Table 1 are merely examples, and the content of the disclosure may be equally applied to times of other lengths. In Table 1, in the case of the 3-second HDMI power check, it may represent an operation of determining that the first power state of the external electronic device is the first state (off state) through the first power indicator after the first time elapses after booting. In Table 1, after 3 seconds have elapsed, the CEC power check represents an example of the electronic device determining the second power state of the external electronic device as any one of the first state (OFF), the second state (ON), the third state (transition to ON), and the fourth state (transition to OFF) through CEC communication in response to determining that the external electronic device is the first type. In Table 1, the HDMI power recheck item relates to an example of determining whether the transition has actually been completed as the power state is in a transitioning state in the case of transition to ON and OFF. In Table 1, the final power determination item relates to an example of ultimately determining the final power state of the external electronic device. In the case of the Power key item, it indicates that a Power key is transmitted in case that the final power state is determined to be OFF, and a Power key is not transmitted in case that the final power state is determined to be ON. An example of the electronic device transmitting a power key may be described in detail in the description of FIG. 6 described below.

FIG. 6 illustrates an operation flow of an electronic device according to an embodiment. FIG. 6 relates to the electronic device performing an operation for controlling the power of the external electronic device according to the determined final power state of the external electronic device after determining the final power state of the external electronic device in the operations according to FIGS. 4 and 5.

According to an embodiment, in operation 610, the electronic device may determine whether the final power state of the external electronic device is determined as the first state.

In an embodiment, in case that the final power state of the external electronic device is determined as the first state, the electronic device may perform operation 620.

According to an embodiment, in operation 620, power key generation and transmission may be performed.

In an embodiment, the electronic device may generate a power key. The power key may mean a key mapped to the external electronic device based on the MBR information of the electronic device for booting the external electronic device. In case that the external electronic device receives a power key suitable for the external electronic device, the power of the external electronic device may be turned on or off.

In an embodiment, the electronic device may generate a power key and transmit it to the external electronic device. The electronic device may transmit the power key to the external electronic device through an IR signal.

Although not illustrated in the drawings, in case that the final power state of the external electronic device is determined as the first state, the electronic device may display a user interface for leading to power control of the external electronic device.

In an embodiment, in case that the final power state of the external electronic device is determined not to be the first state, generation and transmission of the power key may not be performed.

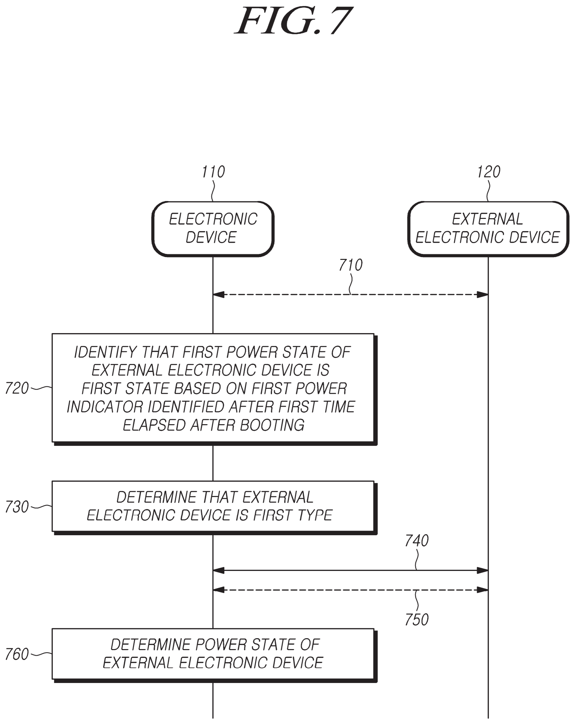

FIG. 7 illustrates a signaling flow between an electronic device and an external electronic device according to an embodiment of the disclosure. The description of FIG. 7 may include all operation contents of the electronic device and the external electronic device of FIGS. 4 to 6, and the external electronic device of FIG. 7 relates to a signaling flow between the electronic device and the external electronic device in case that the external electronic device is a device supporting CEC communication, i.e., in case that the external electronic device is the first type device. In the description of FIG. 7, descriptions of content overlapping those described with reference to FIGS. 1 to 6 may be omitted.

Referring to FIG. 7, in operation 710, the electronic device 110 may request the power state of the external electronic device 120 from the external electronic device 120, and the external electronic device 120 may provide the power state of the external electronic device 120 to the electronic device 110. Operation 710 may mean an operation of identifying the power state of the external electronic device 120 from the external electronic device 120 before the electronic device 110 is turned off. Based on the power state of the external electronic device 120 identified in operation 710, the electronic device 110 may store a power indicator indicating the power state of the external electronic device 120 in the memory.

According to an embodiment, in operation 720, the electronic device 110 may identify that the first power state of the external electronic device 120 is the first state based on the first power indicator identified after the first time elapses after booting. Operation 720 may include all operation contents according to operations 410, 420, and 430 of FIG. 4.

According to an embodiment, in operation 730, the electronic device 110 may determine that the external electronic device 120 is the first type device. Operation 730 may include all of the operations according to operation 440 of FIG. 4.

According to an embodiment, in operation 740, the electronic device 110 may obtain first power state information from the external electronic device 120. Operation 740 may include all operation contents according to operation 450 of FIG. 4.

According to an embodiment, in operation 750, the electronic device 110 may obtain second power state information and a second power indicator from the external electronic device 120. Operation 750 may be an operation performed in case of determining that the first power state of the external electronic device is the third state or the second state based on the first power state information obtained from the external electronic device in operation 450 of FIG. 4, and may be an operation not performed in case of determining that the first power state is the first state or the fourth state. Operation 750 may include all operation contents according to operations 520 and 540 of FIG. 5.

According to an embodiment, in operation 760, the electronic device 110 may determine the final power state of the external electronic device 120. Operation 760 may include all operation contents according to operations 460, 530, and 550.

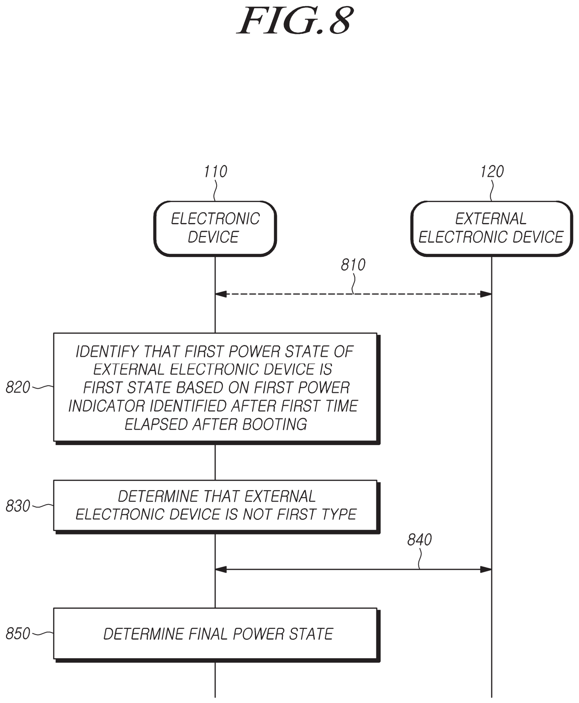

FIG. 8 illustrates a signaling flow between an electronic device and an external electronic device according to an embodiment of the disclosure. The description of FIG. 8 may include all operation contents of the electronic device and the external electronic device of FIGS. 4 to 6, and the external electronic device of FIG. 8 relates to a signaling flow between the electronic device and the external electronic device in case that the external electronic device is a device that does not support CEC communication, i.e., in case that the external electronic device is not the first type device. In the description of FIG. 8, descriptions of content overlapping those described with reference to FIGS. 1 to 7 may be omitted.

Referring to FIG. 8, in operation 810, the electronic device 110 may request the power state of the external electronic device 120 from the external electronic device 120, and the external electronic device 120 may provide the power state of the external electronic device 120 to the electronic device 110. Operation 810 may mean an operation of identifying the power state of the external electronic device 120 from the external electronic device 120 before the electronic device 110 is turned off. Based on the power state of the external electronic device 120 identified in operation 810, the electronic device 110 may store a power indicator indicating the power state of the external electronic device 120 in the memory.

According to an embodiment, in operation 820, the electronic device 110 may identify that the first power state of the external electronic device 120 is the first state based on the first power indicator identified after the first time elapses after booting. Operation 820 may include all operation contents according to operations 410, 420, and 430 of FIG. 4.

According to an embodiment, in operation 830, the electronic device 110 may determine that the external electronic device 120 is not the first type device. Operation 830 may include all of the operations according to operation 440 of FIG. 4.

According to an embodiment, in operation 840, the electronic device 110 may obtain a third power indicator from the external electronic device 120. Operation 840 may include all operation contents according to operation 470 of FIG. 4.

According to an embodiment, in operation 850, the electronic device 110 may determine the final power state of the external electronic device 120. Operation 850 may include all operation contents according to operation 480.

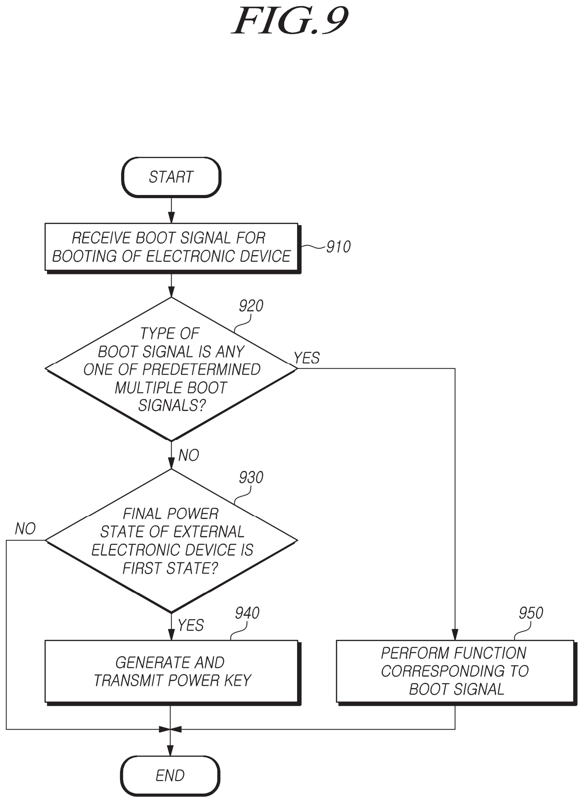

FIG. 9 illustrates an operation flow of an electronic device according to an embodiment. The operation flow of the electronic device in FIG. 9 relates to an operation flow of the electronic device in case of performing the operations of FIGS. 1 to 8 only in case that control of the power of the external electronic device is necessary according to the booting reason.

According to an embodiment, in operation 910, the electronic device may receive a boot signal for booting the electronic device.

In an embodiment, the boot signal for booting may include a short-range wireless communication signal received from a remote control device (e.g., a remote controller) controlling the electronic device or a portable terminal, a signal received from an access point (AP), a first voice signal that is a voice signal for turning on the TV screen (e.g., "Turn on the TV"), a second voice signal for performing only some functions of the TV (e.g., "How's the weather today?"), etc.

In an embodiment, the electronic device may perform booting of the electronic device in response to receiving the boot signal.

According to an embodiment, in operation 920, the electronic device may determine whether the type of boot signal is any one boot signal among a plurality of predetermined boot signals.

In an embodiment, the plurality of predetermined boot signals may include a second voice signal identified in a voice recognition mode (e.g., always on voice (AoV)). In the case of the second voice signal, since it is a boot signal received to perform only some functions (e.g., weather check, time check, etc.), it may not be necessary to boot an external electronic device such as a set-top box, so the electronic device may not perform the operation for power control of the external electronic device described with reference to FIGS. 1 to 8 above in case of performing booting through the second voice signal.

In an embodiment, the plurality of predetermined boot signals may include a boot signal received from an access point (AP), a portable terminal (e.g., a smartphone), or another IoT device for connection between the electronic device and a network. The electronic device may wake up periodically to maintain a connection to an loT server, etc. For this purpose, since booting is performed simply for the purpose of maintaining connection to the network, booting of an external electronic device such as a set-top box may be unnecessary. Therefore, in case that a boot signal for maintaining connection to the network is received, the electronic device may not perform the operation for power control of the external electronic device described above with reference to FIGS. 1 to 8.

In an embodiment, the plurality of predetermined boot signals may include a boot signal received from a portable terminal based on short-range wireless communication technology such as Wi-Fi or Bluetooth. In the case of a signal based on short-range wireless communication technology received from a portable terminal, it may be booting the electronic device through a mirroring service with the portable terminal, so booting of the external electronic device may be unnecessary. Therefore, in case of receiving a boot signal from a portable terminal, the electronic device may not perform the operation of the electronic device of FIGS. 1 to 8 for power control of the external electronic device.

In an embodiment, in case that the electronic device determines in operation 920 that the type of boot signal is any one boot signal among the plurality of predetermined boot signals, the electronic device may perform operation 950. In an embodiment, in case that the electronic device determines in operation 920 that the type of boot signal is not any one boot signal among the plurality of predetermined boot signals, the electronic device may perform operation 930.

According to an embodiment, in operation 930, the electronic device may determine whether the final power state of the external electronic device is the first state. Operation 930 may include all operation contents according to operations 420 to 480 of FIG. 4.

In an embodiment, in operation 940, the electronic device may generate a power key and transmit it to the external electronic device. Operation 940 may include all operation contents of operation 620 of FIG. 6.

According to an embodiment, in operation 950, the electronic device may perform a function corresponding to the boot signal.

In an embodiment, in case that the boot signal is the second voice signal, the electronic device may perform utterance content included in the second voice signal. For example, in case that the utterance content included in the second voice signal is content requesting information about the weather, only information about the weather may be displayed in a partial area of the screen.

In an embodiment, in case that the boot signal is a boot signal for maintaining network connection, the electronic device may perform only an operation for network connection.

In an embodiment, in case that the boot signal is a short-range wireless communication signal received from a smartphone, the electronic device may perform a function for a mirroring service.

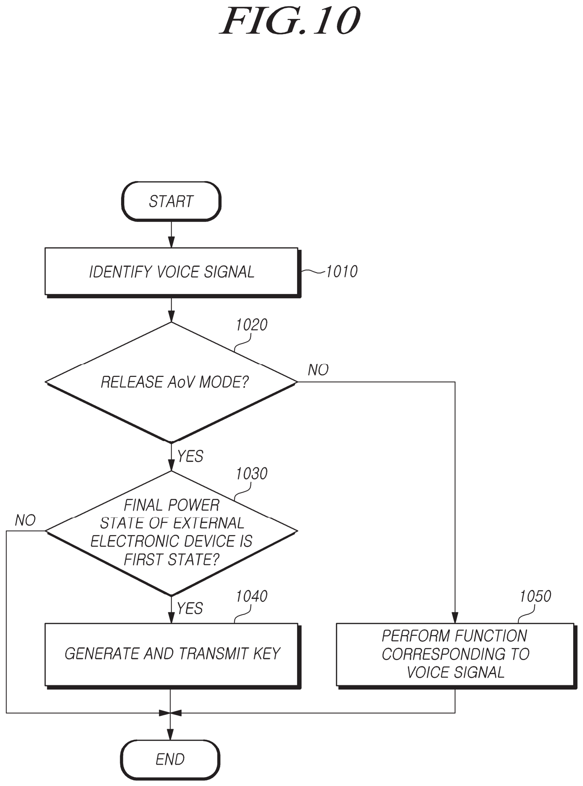

FIG. 10 illustrates an operation flow of an electronic device according to an embodiment of the disclosure. The operation of FIG. 10 may relate to booting by a voice signal among the operation contents of the electronic device of FIG. 9.

According to an embodiment, in operation 1010, a voice signal may be identified. The voice signal may mean a voice signal for booting the electronic device.

According to an embodiment, in operation 1020, the electronic device may determine whether to release a voice recognition mode.

In an embodiment, in case that the voice signal is the first voice signal, the electronic device may determine to release the voice recognition mode. In case that the voice signal is a voice signal including utterance content for turning on the electronic device (e.g., "turn on"), the electronic device may release the voice recognition mode and perform operation 1030.

In an embodiment, in case that the voice signal is the second voice signal, the electronic device may determine not to release the voice recognition mode. In case that the voice signal includes only utterance content for performing only some functions through the voice signal (e.g., "What's the weather today?"), the electronic device may determine not to release the voice recognition mode.

In an embodiment, in case that the electronic device determines to release the voice recognition mode in operation 1020, it may perform operation 1030. In an embodiment, in case that the electronic device determines not to release the voice recognition mode in operation 1020, it may perform operation 1050.

According to an embodiment, in operation 1030, it may determine whether the final power state of the external electronic device is the first state. Operation 1030 may include all operation contents according to operations 420 to 480 of FIG. 4.

According to an embodiment, in operation 1040, the electronic device may generate a power key and transmit it to the external electronic device. Operation 1040 may include all of the operations according to operation 620 of FIG. 6.

According to an embodiment, in operation 1050, the electronic device may perform a function corresponding to the voice signal. For example, in case that the voice signal includes utterance content requesting information about the weather, the electronic device may display information about the weather in a partial area of the display of the electronic device.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device 110 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a high-definition multimedia interface (HDMI) connector wiredly connecting the electronic device and an external electronic device and including a first pin and a second pin;
a memory storing at least one instruction; and
at least one processor connected to the HDMI connector and the memory and executing the at least one instruction stored in the memory, wherein the at least one processor is configured to:
identify a first power state of the external electronic device based on a first power indicator identified after a first time elapses after booting of the electronic device, wherein the first power indicator is identified based on an electrical signal received through the first pin;
determine whether the external electronic device is a first type device supporting HDMI-CEC (consumer electronics control) communication through the second pin, based on identifying that the first power state is a first state;
obtain first power state information from the external electronic device through the second pin based on determining that the external electronic device is the first type device; and
determine a final power state of the external electronic device based on the first power state information.

2. The electronic device of claim 1, wherein the first power indicator indicates a power state of the external electronic device as either a first state being a turned-off state or a second state being a turned-on state, and
wherein the first power state information includes information indicating that the power state of the external electronic device is any one of the first state, the second state, a third state being a state transitioning from the first state to the second state, and a fourth state being a state transitioning from the second state to the first state.

3. The electronic device of claim 2, wherein the at least one processor is configured to:
identify a second power state of the external electronic device based on the first power state information;
determine the second power state as the final power state in response to determining that the second power state is the first state or the second state; and
identify second power state information and a second power indicator in response to determining that the second power state is the third state or the fourth state.

4. The electronic device of claim 3, wherein the at least one processor is configured to:
identify the second power state information and the second power indicator after a second time elapses from a time at which the electronic device identified the second power state.

5. The electronic device of claim 4, wherein the at least one processor is configured to:
determine the final power state as the first state in case of determining that the second power state is the third state; and
determine a third power state determined based on the second power state information and the second power indicator as the final power state in case of determining that the second power state is the fourth state, and
wherein the third power state is either the first state or the second state.

6. The electronic device of claim 5, wherein the at least one processor is configured to determine the final power state of the external electronic device based on a third power indicator identified after a third time elapses from in a time of determining that the external electronic device is not the first type, in response to determining that the external electronic device is not the first type.

7. The electronic device of claim 6, further comprising an infrared (IR) transmitter, wherein the at least one processor is configured to:
generate a power key for power control of the external electronic device in response to determining that the final power state of the external electronic device is the first state; and
transmit the power key through the IR transmitter.

8. The electronic device of claim 6, wherein the at least one processor is configured to:
display a user interface for controlling power of the external electronic device in case of determining that the final power state of the external electronic device is the first state.

9. The electronic device of any one of claims 2 to 8, wherein the memory includes information regarding whether the external electronic device is the first type, and
wherein the at least one processor is configured to: determine whether the external electronic device is the first type based on the information regarding whether the external electronic device is the first type.

10. The electronic device of any one of claims 1 to 9, wherein the at least one processor is configured to:
identify a type of boot signal that triggered the booting;
determine whether power control of the external electronic device is necessary based on the type of the boot signal;
identify the first power identifier in case of determining that power control of the external electronic device is necessary; and
perform at least one function corresponding to the boot signal in case of determining that power control of the external electronic device is not necessary.

11. The electronic device of claim 10, wherein the at least one processor is configured to:
determine whether to release an AoV (always on voice) mode in response to identifying that the boot signal is a voice signal identified in the AoV mode;
determine that power control of the external electronic device is necessary in case of determining to release the AoV mode; and
perform a function corresponding to information regarding a voice command included in the voice signal in case of determining not to release the AoV mode.

12. A method of operating an electronic device, the method comprising:
identifying a first power state of an external electronic device based on a first power indicator identified after a first time elapses after booting of the electronic device;
determining whether the external electronic device is a first type device supporting HDMI-CEC (consumer electronics control) communication through a second pin of a high-definition multimedia interface (HDMI) connector, based on identifying that the first power state is a first state;
obtaining first power state information from the external electronic device through the second pin based on determining that the external electronic device is the first type device; and
determining a final power state of the external electronic device based on the first power state information,
wherein the first power indicator is identified based on an electrical signal received through a first pin of the HDMI connector.

13. The method of claim 12, wherein the first power indicator indicates a power state of the external electronic device as either a first state being a turned-off state or a second state being a turned-on state, and
wherein the first power state information includes information indicating that the power state of the external electronic device is any one of the first state, the second state, a third state being a state transitioning from the first state to the second state, and a fourth state being a state transitioning from the second state to the first state.

14. The method of claim 13, comprising:
identifying a second power state of the external electronic device based on the first power state information;
determining the second power state as the final power state in response to determining that the second power state is the first state or the second state; and
identifying second power state information and a second power indicator in response to determining that the second power state is the third state or the fourth state.

15. The method of claim 14, comprising identifying the second power state information and the second power indicator after a second time elapses from a time at which the electronic device identified the second power state.
